# EUROPEAN PATENT APPLICATION

(11) **EP 4 814 703 A1**
(43) Date of publication of application: **30.09.2026**
(21) Application number: 24893049.7
(22) Date of filing: 29.09.2024
(51) Int. Cl.: G06F 8/71

(54) **APPLICATION CREATION METHOD AND APPARATUS, DEVICE, AND STORAGE MEDIUM**

(30) Priority: 22.11.2023 CN 202311570251
(71) Applicant: Beijing Zitiao Network Technology Co., Ltd., Beijing 100190 (CN)
(72) Inventor: MA, Jin, Beijing 100028 (CN); YANG, Wenhai, Beijing 100028 (CN); HUANG, Shuxuan, Beijing 100028 (CN); JIANG, Shihao, Beijing 100028 (CN); YAO, Can, Beijing 100028 (CN)
(74) Representative: Grünecker Patent- und Rechtsanwälte PartG mbB
(86) International application number: PCT/CN2024/122419
(87) International publication number: WO 2025/107890

(57) **Abstract**

Embodiments of the disclosure provide a method, device, equipment and storage medium for application creation. The method includes: receiving a function adding request for adding a function to a target application; receiving first configuration information for a first function, the first configuration information at least indicating a type of the first function and first data associated with the first function, and the first function being configured to invoke at least a first model to perform task processing based on the first data; and adding the first function to the target application based on the first configuration information. Therefore, the function required in the target application can be created, and the efficient and rapid application creation can be realized.

## Description

This application claims the priority of Chinese Patent Application No. 202311570251.9, filed Nov. 22, 2023, entitled "Methods, Apparatuses, Device, and Storage Medium for Application Creation," the entire content of which is incorporated herein by reference.

### FIELD

Example embodiments of the present disclosure generally relate to the field of computers, and in particular, to a method, apparatus, device, and computer-readable storage medium for application creation.

### BACKGROUND

With the development of information technologies, various terminal devices may provide various services to people in terms of work and life, etc. An application providing a service may be deployed at a terminal device. The terminal device presents corresponding content through a user interface of the application and implements interaction with a user, to satisfy diverse requirements of the user. In some cases, the user may initiate a query request within an application. Therefore, how to improve a quality of query services provided to the user is a problem being concerned.

### SUMMARY

In a first aspect of the present disclosure, a method of application creation is provided. The method includes: receiving a function adding request for adding a function to a target application; receiving first configuration information for a first function, the first configuration information at least indicating a type of the first function and first data associated with the first function, and the first function being configured to invoke at least a first model to perform task processing based on the first data; and adding the first function to the target application based on the first configuration information.

In a second aspect of the present disclosure, a method of data processing is provided. The method includes: providing, in a creation of a target application, in response to a first adding request for a data operating function, a first configuration page for the data operating function, the data operating function being configured to be capable of providing at least one type of data operation; receiving first function configuration information for the data operating function via the first configuration page, the first function configuration information indicating at least a part of a first data object; and creating a first function instance of the data operating function in the target application based on the first function configuration information, the first function instance being configured to at least perform one or more types of data operations among the at least one type of data operation on the at least part of the first data object.

In a third aspect of the present disclosure, a method of data processing is provided. The method includes: receiving a user query for a target application; processing the user query with a first function instance in the target application, the first function instance being configured at least to perform one or more types of data operations on at least a part of a first data object; and presenting a form corresponding to the user query, the form comprising at least one field associated with the user query in the first data object.

In a fourth aspect of the present disclosure, an apparatus for application creation is provided. The apparatus includes: an adding request receiving module configured to receive a function adding request for adding a function to a target application; a configuration information receiving module configured to receive first configuration information for a first function, the first configuration information at least indicating a type of the first function and first data associated with the first function, and the first function being configured to invoke at least a first model to perform task processing based on the first data; and a first function adding module configured to add the first function to the target application based on the first configuration information.

In a fifth aspect of the present disclosure, an apparatus for data processing is provided. The apparatus includes: a page configuration module configured to provide, in a creation of a target application, in response to a first adding request for a data operating function, a first configuration page for the data operating function, the data operating function being configured to be capable of providing at least one type of data operation; a receiving configuration information module configured to receive first function configuration information for the data operating function via the first configuration page, the first function configuration information indicating at least a part of a first data object; and a function instance creating module configured to create a first function instance of the data operating function in the target application based on the first function configuration information, the first function instance being configured to perform one or more types of data operations among the at least one type of data operation on the at least part of the first data object.

In a sixth aspect of the present disclosure, an apparatus for data processing is provided. The apparatus includes: a receiving user query module configured to receive a user query for a target application; a processing module configured to process the user query with a first function instance in the target application, the first function instance being configured at least to perform one or more types of data operations on at least a part of a first data object; and a presenting form module configured to present a form corresponding to the user query, the form comprising at least one field associated with the user query in the first data object.

In a seventh aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the electronic device to perform the method of the first aspect, and/or perform the method of the second aspect, and/or perform the method of the third aspect.

In an eighth aspect of the present disclosure, a computer-readable storage medium is provided. The medium has a computer program stored thereon, which, when executed by the processor, performs the method of the first aspect, and/or performs the method of the second aspect, and/or performs the method of the third aspect.

In a ninth aspect of the present disclosure, a computer program product is provided. The computer program product is tangibly stored in a computer storage medium and includes computer executable instructions that, when executed by a device, cause the device to perform the method of the first aspect, and/or perform the method of the second aspect, and/or perform the method of the third aspect.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent in combination with the accompanying drawings and with reference to the following detail description. In the drawings, the same or similar reference numbers refer to the same or similar elements, wherein:
FIG. 1A illustrates a schematic diagram of an example environment in which embodiments of the present disclosure can be implemented;
FIGS. 1B-1F illustrate schematic diagrams of example interfaces according to some embodiments of the present disclosure;
FIGS. 2A-2D illustrate schematic diagrams of example interfaces according to some embodiments of the present disclosure;
FIG. 3 illustrates a schematic diagram of an example interface according to some embodiments of the present disclosure;
FIG. 4A illustrates a flowchart of a process for application creation according to some embodiments of the present disclosure;
FIG. 4B illustrates a flowchart of a process for data processing according to some other embodiments of the present disclosure;
FIG. 4C illustrates a flowchart of a process for data processing according to some other embodiments of the present disclosure;
FIG. 5A illustrates a schematic structural block diagram of an apparatus for application creation according to some embodiments of the present disclosure;
FIG. 5B illustrates a schematic structural block diagram of an apparatus for data processing according to some embodiments of the present disclosure;
FIG. 5C illustrates a schematic structural block diagram of an apparatus for data processing according to some embodiments of the present disclosure; and
FIG. 6 illustrates a block diagram of an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for purposes of illustration only and are not intended to limit the scope of the present disclosure.

In the description of the embodiments of the present disclosure, the terms "include" and the like should be understood to include "including but not limited to". The term "based on" should be understood as "based at least in part on". The terms "an embodiment" or "the embodiment" should be understood as "at least one embodiment". The term "some embodiments" should be understood as "at least some embodiments". Other explicit and implicit definitions may also be included below.

Herein, unless explicitly stated, "in response to A" performs one step does not imply that this step is performed immediately after "A", but may include one or more intermediate steps.

It may be understood that the data involved in the technical solution (including but not limited to the data itself, the obtaining, using, storing or deleting of the data) should follow the requirements of the corresponding laws and regulations and related provisions.

It may be understood that before using the technical solutions disclosed in the various embodiments of the present disclosure, relevant users should be informed of the types, use ranges, usage scenarios, and the like of the information related to the present disclosure in an appropriate manner according to relevant laws and regulations, and the authorization of the related users may be obtained, wherein the relevant users may include any type of rights body, such as individuals, businesses, and groups.

For example, when an active request is received from the user, prompt information is sent to the related user to expressly prompt the related user that the operation requested to be performed will obtain and use the information of the related user, so that the related user may autonomously select whether to provide information to software or hardware, such as an electronic device, application, server or storage medium executing the operation of the technical solution of the present disclosure according to the prompt information.

As an optional but non-limiting implementation, in response to receiving an active request from the related user, a manner of sending prompt information to the related user may be, for example, a pop-up window with prompt information presented in text therein. In addition, the pop-up window may further include a selection control for the user to select "agree" or "disagree" to provide the information to the electronic device.

It should be understood that the foregoing process of notifying and obtaining the user authorization are merely illustrative, and do not consider as limiting to the implementations of the present disclosure, and other manners complying with the related laws and regulations may also be applied to implementations of the present disclosure. In the present disclosure, regarding enabling a digital assistant related function, acquiring data, data processing and storage mode and the like, an advanced authorization of the user or other rights entities associated with the user may be obtained, and the agreements of the related laws and regulations and the protocol rules between rights entities should be complied.

As used herein, the term "model" may learn an association relationship between respective inputs and outputs from training data, to generate a corresponding output for a given input after the training is complete. The generation of the model may be based on machine learning techniques. Deep learning is a kind of machine learning algorithm that processes inputs and provides corresponding outputs by using multi-layer processing units. The neural network model is one example of a model based on the deep learning model. As used herein, a "model" may also be referred to as a "machine learning model," a "learning model," a "machine learning network," or a "learning network," which terms are used interchangeably herein.

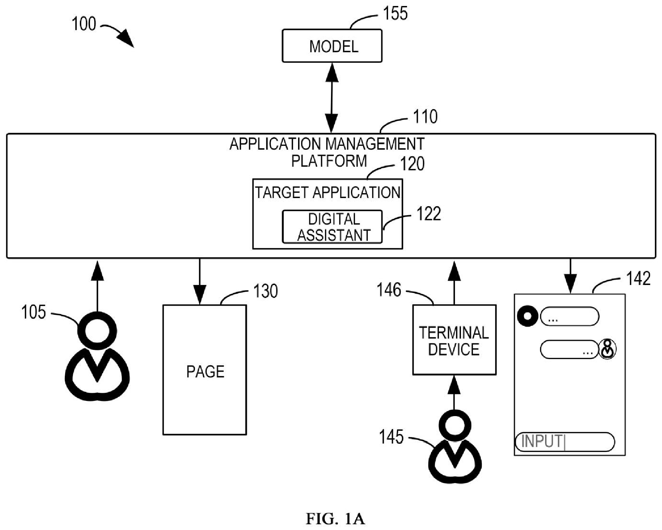

FIG. 1A illustrates a schematic diagram of an example environment 100 in which embodiments of the present disclosure can be implemented. The environment 100 relates to an application management platform 110, which may support creation of applications and/or operations of the applications. In some embodiments, the portion of the application management platform 110 used to support application creation may also be referred to as an application creation portion. In some embodiments, the portion of the application management platform 110 used to support application running may also be referred to as an application running portion.

As shown in FIG. 1A, the application creation portion may provide the user 105 with an creation and releasing environment of the application. The user 105 may be referred to as an application creation user, creator. In some embodiments, the application creation portion may be a low-code platform that provides a set of tools for the application creation. The application creation portion may support visual development of various applications, so that the developers may skip the manual coding process, and the development cycle is accelerated and the cost of the application is lowered. The application creation portion may be any suitable platform that supports the user to develop one or more types of applications, which, for example, may include an application platform-as-a-service (aPaaS) based platform. Such a platform may support the user to efficiently develop applications, and implement operations such as application creation, application function adjustment and the like.

The application creation portion may be deployed locally on the terminal device of the user 105 and/or may be supported by the server device. For example, the terminal device of the user 105 may run a client of the application creation portion, and the client may support interaction between a user and an application creation portion provided by the server. In a case that the application creation portion runs locally on the terminal device of the user, the user 105 may directly interact with the local application creation portion using the terminal device. In a case that the application creation portion runs on the server device, the server device may implement service provisioning of the client running in the terminal device based on the communication connection with the terminal device. The application creation portion may present a respective page 130 to the user 105 based on the operation of the user 105 to output to the user 105 and/or receive information related to the application creation from the user 105.

In some embodiments, the application creation portion may be associated with a respective database which stores data or information needed for the application creation process supported by the application creation portion. For example, the database may store code and description information corresponding to various function modules for composing the application. The application creation portion may also perform operations such as invoking, adding, deleting, updating, and the like on the functional modules in the database. The database may also store executable operations for different functional blocks. For example, in a scenario in which an application needs to be created, the application creation portion may invoke a corresponding function block from a database to construct the application.

In embodiments of the present disclosure, the user 105 may create a target application 120 on the application creation portion as needed, and release the target application 120. The target application 120 may be released to any appropriate application running portion so long as the application running portion is able to support the execution of the target application 120. After the releasing, the target application 120 may be used for operation by one or more end users 145. The end user 145 may operate the target application 120 through an associated terminal device 146 and, in turn, interact with the application management platform 110. The end user 145 may be referred to as an end user of the target application 120. In some embodiments, the target application 120 may include or be implemented as a digital assistant 122.

The digital assistant 122 may be configured with a capability of intelligent conversation. In the example shown in FIG. 1A, the digital assistant 122 may be integrated within the target application 120 as part of the target application 120 to assist in task processing within the target application 120. In other examples, the digital assistant 122 may be configured as a stand-alone application, such as a web application or other type of application. In such an example, the digital assistant 122 and the target application 120 may be considered as a same application. The digital assistant 122 is provided to assist the user in various task processing requirements in different applications and scenarios. During interaction with the digital assistant 122, the user inputs an interaction message and the digital assistant 122 provides a reply message in response to the user input. Generally, the digital assistant 122 can support users to input questions in natural language and can perform tasks and provide replies based on understanding of the natural-language input and logical reasoning capabilities.

In some embodiments, digital assistant 122 may interact with a contact of the end user 145. For example, the digital assistant 122 may be implemented in an instant messaging (IM) application. The digital assistant 122 may interact with the end user 145 in a one-on-one chat session with the end user 145. In some embodiments, the digital assistant 122 may interact with multiple users in a group chat session that includes the multiple users.

For each end user 145, the client of the application running portion may present an interaction window 142 of the target application 120 or the digital assistant 122 in an interface of the client, such as a session window with the digital assistant 122. The end user 145 may input a session message in a session window, and the target application 120 may determine, based on the created configuration information, a reply message for the digital assistant 122 and present to the user in the interaction window 142. In some embodiments, the interaction message with the target application 120 may include a multimodal message, such as a text message (e.g., natural language text), a voice message, an image message, a video message, etc., depending on the configuration of the target application 120.

Similar to the application creation portion, the application running portion may be deployed locally at the terminal device of each end user 145, and/or may be supported by the server device. For example, the terminal device of the end user 145 may run a client of the application running portion which can support interaction between a user and an application running portion provided by the server. In a case that the application running portion runs locally in the terminal device of the user, the end user 145 may directly interact with the local application running portion using the terminal device. In a case that the application running portion runs in the server device, the server device may implement service provisioning to the client running in the terminal device based on the communication connection with the terminal device. The application running portion may present a corresponding application page to the end user 145 based on the operation of the end user 145 to output to the end user 145 and/or receive information related to the application usage from the end user 145.

In some embodiments, implementations of at least partial functionality of the target application 120, and/or implementations of at least partial functionality of the digital assistant 122 in the target application 120 may be implemented based on a model. One or more models 155, such as the capabilities of the model 155, may be invoked during the creation or running of the target application 120. In the target application 120, the digital assistant 122 may utilize the model 155 to understand the user input and provide a reply to the user based on the output of the model 155.

During the creation process, the application management platform 110 may utilize the model 155 for testing of the target application 120, so as to determine that the running result of the target application 120 meets expectations. During the running process, in response to different operation requests from the users of the target application 120, the application running portion may utilize the model 155 to determine a response result to the user.

Although shown as independent of the application management platform 110, one or more models 155 may run on the application management platform 110, or other remote servers. In some embodiments, the model 155 may be a machine learning model, a deep learning model, a learning model, a neural network, or the like. In some embodiments, the model may be based on a language model (LM). The language model may obtain a capability of question-answering by learning from a large amount of corpus. The model 155 may also be constructed based on other suitable models.

The application management platform 110 may be running on a suitable electronic device. The electronic device herein may be any type of device having the computing capability, including a terminal device or a server device. The terminal device may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a pointing device, a television receiver, a radio broadcast receiver, an e-book device, a gaming device, or any combination of the foregoing, including accessories and peripherals of these devices, or any combination thereof. The server device may include, for example, a computing system/server, such as a mainframe, an edge computing node, a computing device in a cloud environment, or the like. In some embodiments, the management platform 110 may be implemented based on cloud services.

It should be understood that the structure and functions of the environment 100 are described for purposes of illustration only and does not imply any limitation to the scope of the present disclosure. For example, although FIG. 1A illustrates a single user interacting with the application creation portion and a single user interacting with the application running portion, in practice, multiple users may access the application management platform 110 each to create a digital assistant, and each digital assistant may be used to interact with multiple users.

For an application creator, the question in interest is how to efficiently and conveniently construct an application with capabilities for creating and updating various functions in the application, including a data operating capability.

In an embodiment of the present disclosure, there is provided an improved solution for application creation. This solution includes: receiving a function adding request for adding a function to a target application; receiving first configuration information for a first function, the first configuration information at least indicating a type of the first function and first data associated with the first function, and the first function being configured to at least invoke a first model to perform task processing based on the first data; and based on the first configuration information, adding the first function to the target application. In this way, the user 105 can create various types of functions in the target application and associate corresponding data to these functions. These functions can perform task processing for the user 105 based on the capability of artificial intelligence by invoking the models. In this way, efficient and rapid application creation can be achieved.

In the embodiments of the present disclosure, there is provided an improved solution for data processing. This solution includes: during the creation of the target application, in response to a first adding request for a data operating function, providing a first configuration page for a data operating function, the data operating function being configured to be capable of providing at least one type of data operation; receiving, via the first configuration page, first function configuration information for the data operating function, the first function configuration information indicating at least a part of the first data object; and creating a first function instance of the data operating function in the target application based on the first function configuration information, the first function instance being configured to at least perform one or more types of data operations among the at least one type of data operation on at least a part of the first data object. In this way, when creating the target application, one or more function instances may be autonomously created by the user 105 based on the data operating function, with each instance associated with at least part of a data object. This enables the user to complete the creation of the function required in the target application by simply selecting the data object and configuring the other function information as needed. As such, the efficient and rapid application creation can be achieved.

In the following, an example is used to describe a scenario applicable to the present disclosure. The following example is only for the purposes of illustration, and the embodiments of the present disclosure are not limited in this regard.

During the process of following up service opportunities and visiting customers, a sales user may need an assistant to quickly record the follow-up records for the business/customer. In order to enable the assistant to quickly record the follow-up records of the business/customer, the creator creates a target application. The creator prepares a data object for the following up records of the service opportunity and clarify the fields to be include in the data object, what type each field is, and fill out the field description. The creator enables the data operating function in the target application and performs the following configuration on the function: configuring a data object requiring data creation. The creator then enables the skill in the target application and completes debugging. The creator then releases this target application.

After the target application is released, a sales user may have a conversation with the target application in a one-to-one chat or group chat: Client XX visited today, and the follow-up records are: xxxxxxx. At this time, the target application returns with a form which includes all the fields returned by the data object to be updated; and some object values that have been identified from the user input are filled into the form. After the user confirms the content and completes the filling of the form, a button of [submit] is clicked and the form is submitted. The data of the data object now has an addition of a new record.

Some example embodiments of the present disclosure will be described in detail below with reference to examples of the accompanying drawings. It should be understood that the pages shown in the drawings are merely examples, and there may be various page designs. The graphical elements in the page may have different arrangements and different visual representations, one or more of which may be omitted or replaced, and one or more other elements may also be present. Embodiments of the present disclosure are not limited in this regard.

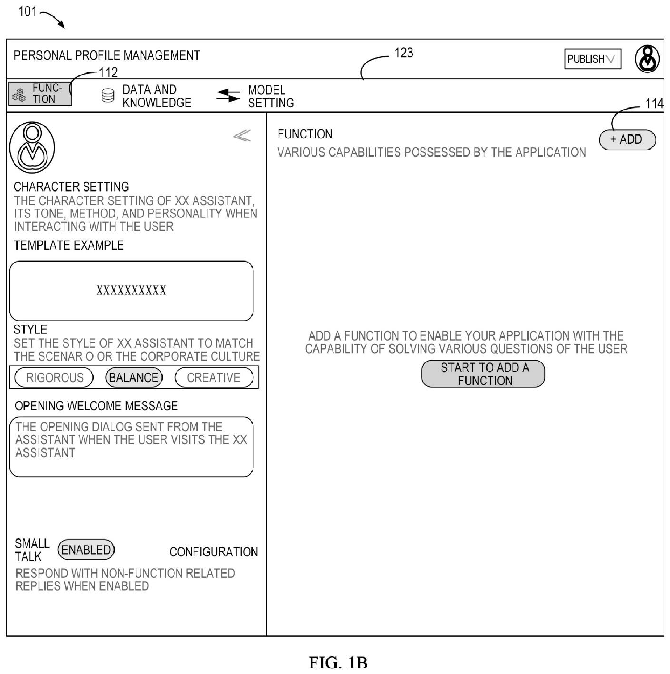

FIG. 1B to FIG. 1F illustrate schematic diagrams of example interfaces in an application creation process according to some embodiments of the present disclosure.

In some embodiments, the application management platform 110 receives a function adding request for adding a function to the target application 120. The user 105 may add one or more functions to the target application 120, and the application management platform 110 may receive a function adding request from the user 105.

In some embodiments, the application management platform 110 receives first configuration information for a first function, where the first configuration information at least indicates a type of the first function and first data associated with the first function. The first function is configured to invoke at least a first model to perform task processing based on the first data. The target application 120 may provide a plurality of types of functions for the user 105 to add; thus the first configuration information indicates the type of the first function. In addition, the first function requires the first data for processing.

In some embodiments, after receiving the function adding request, the application management platform 110 provides a function configuration page in response to receiving the function adding request. For example, in a schematic diagram 101 shown in FIG. 1B, the application management platform 110 provides a function configuration page 123 in response to the user 105 clicking a function 112.

In some embodiments, the application management platform 110 receives the first configuration information via the function configuration page. As shown in FIG. 1B, the user 105 may click an add control 114 to add the first function in the target application 120. When adding a function, the user 105 determines the type of the first function and the first data associated with the first function. The first function may perform, based on the capability of artificial intelligence, task processing of the first data by invoking the first model.

In some embodiments, the application management platform 110 receives a selection of a type of the first function from a plurality of predetermined function types. The target application 120 may provide multiple predetermined function types for the user 105 to add. The execution logic of different types of functions and the first model to be involved by the different types of functions may not be the same. The user 105 may select the type of the first function from the plurality of predetermined function types.

In some embodiments, the application management platform 110 receives, in response to the selection of the type of the first function, the first configuration information corresponding to the type of the first function. For example, the predetermined function type provided by the target application 120 includes a type A, a type B, and a type C. If the type of the first function selected by the user 105 is the type A, the application management platform 110 may receive the first configuration information corresponding to the type A of the first function.

In some embodiments, the plurality of predetermined function types include at least one of the following: a data processing function, a question and answering function, and a data analysis function. For example, the data processing function may automatically provide the user 105 with services such as creating data, deleting data, updating data, querying data, and the like. The question and answering function may return a corresponding result in response to the question of the user 105. For example, the question of the user is "How to quickly master a language?" The question and answering function may answer the question of the user 105 based on the information stored in the knowledge base. The data analysis function may mine and provide insights on the data in the database to determine the meanings of the data.

In some embodiments, the application management platform 110 receives a selection of a first data source from one or more data sources. The user 105 also needs to select a data source for the added function, such that the added function can perform task processing based on the data source Therefore, the application management platform 110 receives a selection of a first data source of the one or more data sources by the user 105.

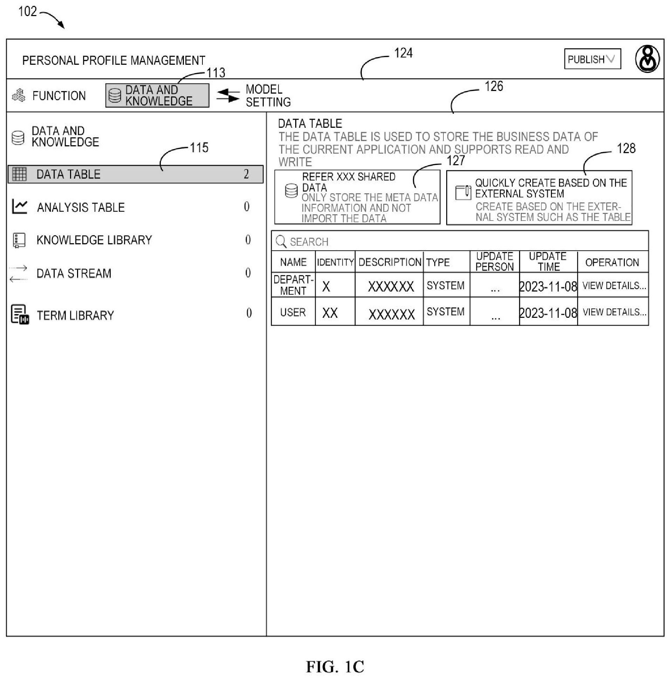

In some embodiments, the application management platform 110 provides options for one or more data objects in the first data source and receives a selection of a first data object from the one or more data objects as at least part of the first data. For example, in a diagram 102 as shown in FIG. 1C, the application management platform 110 provides a data source selection interface 124 in response to the user 105 clicking on data and knowledge 113. In the data source selection interface 124, the user may click a data table 115 to use as a first data source. After the data table 115 is clicked, the application management platform 110 may provide a data object selection page 126 which includes an option(s) for one or more data objects of the first data source. For example, the application management platform 110 may provide a control of "reference to xxx shared data 127" to allow the user 105 to reference to shared data from other systems, or may provide a control of "table established based on external system 128" to allow the user 105 to create a new data table. The application management platform 110 may then receive the selection of the first data object from the one or more data objects as at least part of the first data.

In some embodiments, the one or more data sources include at least one of the following types of data sources: a data table, an analysis table, a knowledge base, a data stream, and a term library. For example, the data table is mainly used to store online service data, and support operations of the user 145 such as creating data, deleting data, updating data, querying data, and the like. The analysis table is mainly used for an offline analysis scenario, and the user 145 can only read the data in the analysis table but cannot edit the data in the analysis table. The term library includes technical terms and their corresponding interpretations. In some embodiments, the content in the term library may help the machine learning model better understand user intent.

In some embodiments, the first function of the application management platform 110 may have a corresponding first workflow. The first function may perform the task processing in form of a workflow.

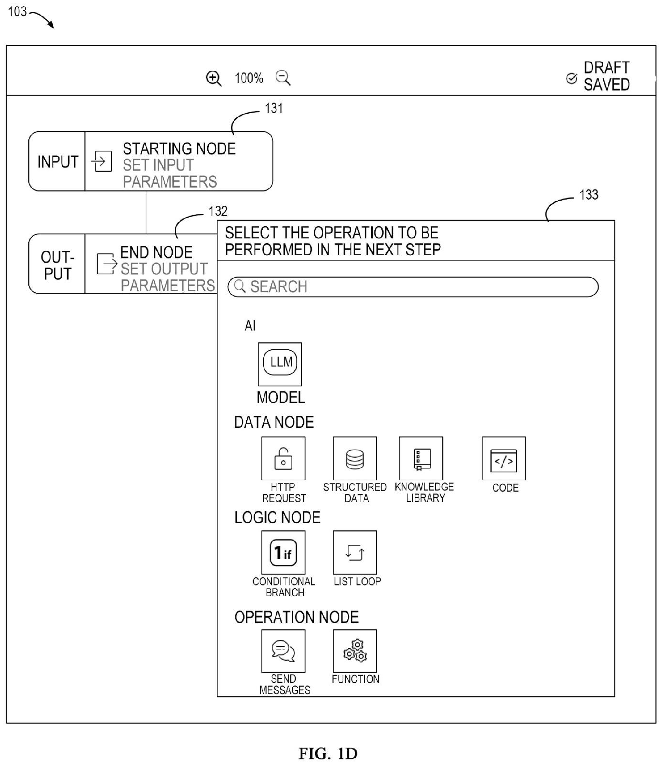

In some embodiments, the application management platform 110 receives, in response to a creation request for a first work node in the first workflow, node configuration information for the first work node, where the node configuration information indicates an input parameter, an output parameter, and a first operation to be executed by the first work node. The workflow may include a plurality of work nodes. When the workflow proceeds to a specific work node, the operation corresponding to the work node is executed. For example, in a schematic diagram 103 illustrated in FIG. 1D, the user 105 may click a start node 131 to configure the input parameter, and may also click an end node 132 to configure the output parameter. In addition, the user 105 may further configure the first operation to be executed. For example, the user 105 may configure the first operation to be performed in a first operation configuration page 133, where the first operation includes one of the following: invoking the first model, a data processing operation based on the first data, processing logic of the first working node, sending a notification message, and invoking a created function in the target application.

In some embodiments, the application management platform 110 adds the first function in the target application 120 based on the first configuration information.

In some embodiments, the target application 120 has been added with a set of functions including the first function. The application management platform 110 may further receive a function scheduling configuration, which indicates scheduling of the set of functions. The user 105 may have added the set of functions including the first function into the target application 120. The application management platform 110 may further receive the scheduling configuration for the set of functions from the user 105. Based on this, the application management platform 110 may execute different functions in the target application 120 in a reasonable sequence, thereby ensuring coordination between different functions.

In some embodiments, the application management platform 110 receives second configuration information for a plurality of work nodes in a second workflow. The second configuration information indicates that at least one work node of the plurality of work nodes is associated with one or more of the set of functions. The work node in the second workflow corresponds to one or more functions, and the second workflow defines a scheduling relationship between these functions.

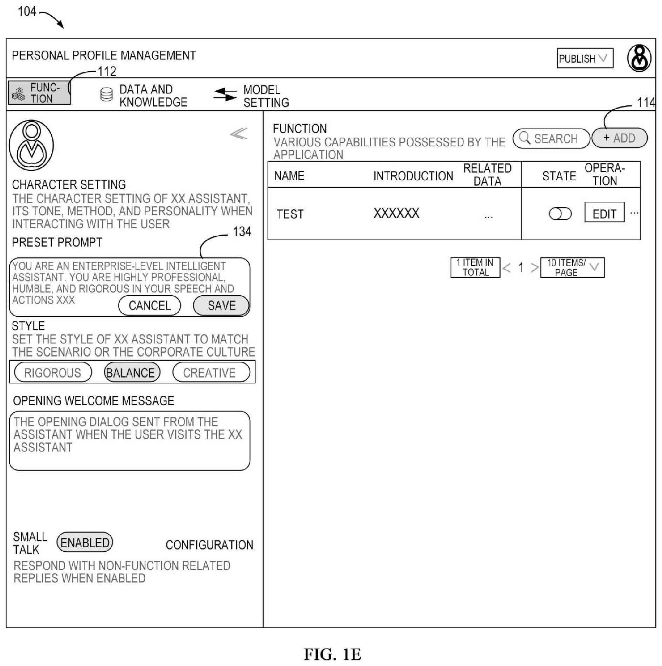

In some embodiments, the application management platform 110 receives a prompt. This prompt is provided to a second model when executing a processing request for the target application, to determine that at least one function of the set of functions is scheduled for execution of the processing request. For example, in a schematic diagram 104 as shown in FIG. 1E, the user 105 may send a prompt 134 to the application management platform 110. The content in the prompt 134 is used to prompt the target application 120 a function(s) to be executed. After receiving the prompt, the application management platform 110 may provide the prompt to the second model to determine that at least one function is scheduled for processing a processing request for the target application 120. Based on this, the target application 120 may correctly schedule different functions based on its own intelligence capability to handle the processing request of the user.

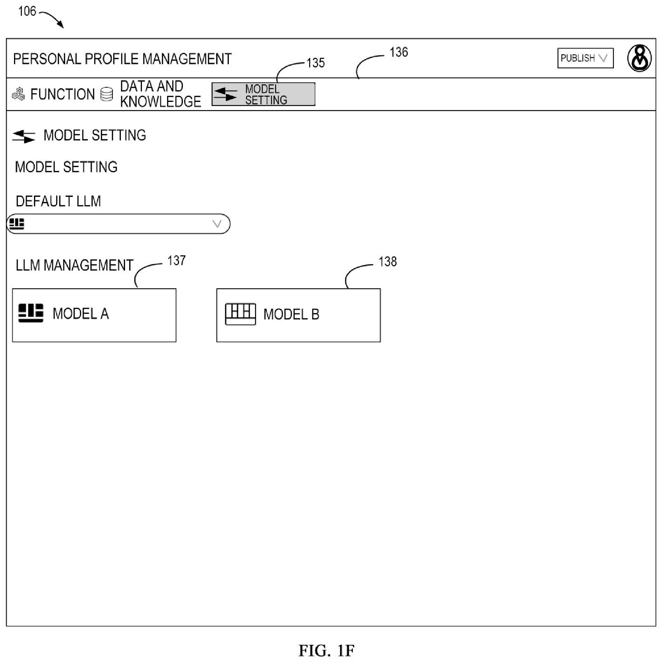

In some embodiments, the application management platform 110 may further provide a model configuration page, and receive a selection of at least one model via the model configuration page. The at least one model being invoked when executing the processing request for the target application. For example, in the schematic diagram 106 as shown in FIG. 1F, the application management platform 110 provides a model configuration page 136 in response to the user 105 clicking model setting 135. For example, the user 105 may click on a model A 137, so that the target application 120 invokes the model A to process the request. The user 105 may also click on a model B 138 so that the target application 120 invokes the model B to process the request. The application management platform 110 may receive, via the model configuration page 136, a selection of the at least one model by the user 105, and the at least one model is invoked when executing the processing request for the target application.

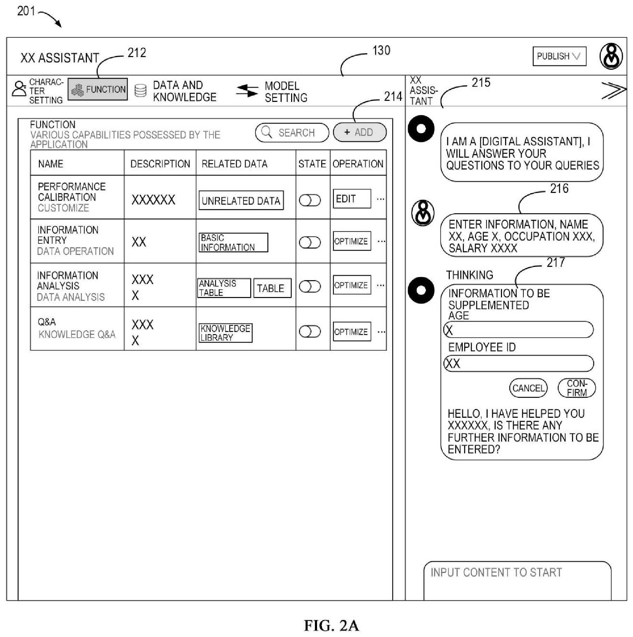

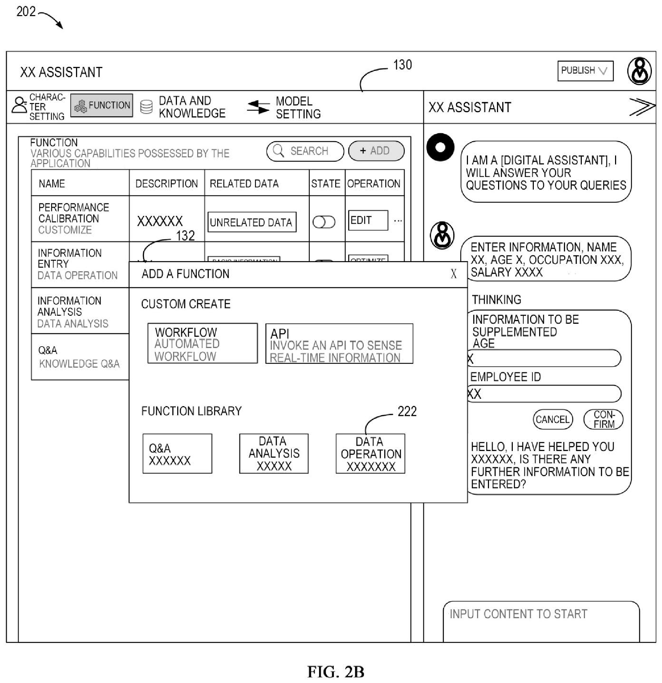

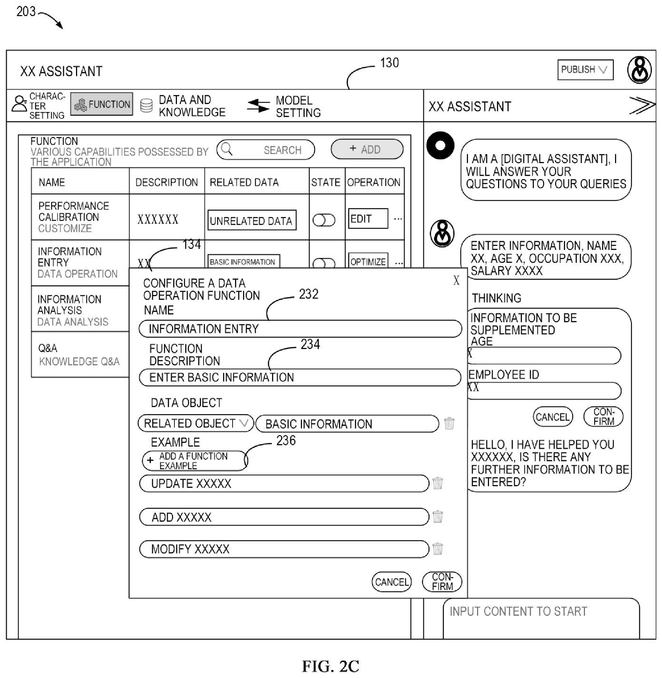

FIGS. 2A-2D illustrate schematic diagrams of example interfaces according to some embodiments of the present disclosure. It should be understood that the application interfaces shown in the drawings are merely examples, and there may be various interface designs. The graphical elements in the interfaces may have different arrangements and different visual representations, one or more of which may be omitted or replaced, and one or more other elements may also be present. Embodiments of the present disclosure are not limited in this regard.

The digital assistant creation process described in the embodiments of the present disclosure may be implemented on an assistant creation platform, a terminal device on which the assistant creation platform is installed, and/or a server corresponding to the assistant creation platform. In the following examples, for purposes of discussion, description may be provided from a perspective of a target application creation platform, such as the application management platform 110 shown in FIG. 1A. The page presented by the application management platform 110 may be presented via the terminal device of the user 105, and the user input may be received via the terminal device of the user 105. The user 105 creating the target application is also sometimes referred to herein as an assistant creator, assistant developer, or the like.

In some embodiments, the application management platform 110 responds to a first adding request for a data operating function 212 during the creation of the target application 120. When creating the target application 120, the application management platform 110 will receive an adding request for the data operating function 212. At this time, the application management platform 110 provides the first configuration page 130 for the data operating function 212 to the user 105 for creating a function instance of the data operating function 212 in the current application. The data operating function is configured by the user 105 to be capable of providing at least one type of data operation 222.

The data operation 222 may include: increasing a respective field value(s) of one or more fields, reading a respective field value(s) of one or more fields, modifying a respective field value(s) of one or more fields, or deleting respective field value of one or more fields, which are related to adding data, deleting data, modifying data, querying data, etc.

In an example, during the process of creating the target application 120, in response to the user 105 clicking on the first adding request for the data operating function 212, the application management platform 110, provides the first configuration page 130 for the data operating function 212. For example, the application management platform 110 may present the first configuration page 130 based on the user 105 clicking the "add" control 214.

In some embodiments, the application management platform 110 receives the first function configuration information for the data operating function 212 via the first configuration page 130. The first function configuration information at least indicates at least part of the first data object.

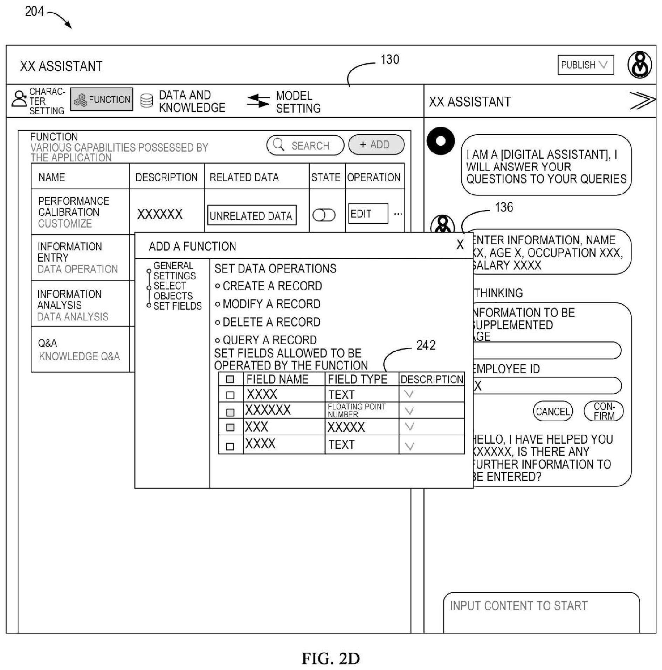

The first function configuration information may include various information input by the user 105 which may be, but is not limited to, for example, an adding data function. The application management platform 110 may learn from the first configuration information that the user 105 needs to operate on the first data object. The first data object may indicate several fields included in the set of data objects, such as shown in an example 204 of FIG. 2D, "setting fields allowed to be operated 242" which indicate the fields that the user 105 can select for setting.

For example, the types of fields included in the first function configuration information may be: text, an integer, a floating point number, a date, a contact manner, an option (including a single selection, a multi-selection), a Boolean type value, and the like.

In some embodiments, the application management platform 110 creates a first function instance of the data operating function 212 in the target application 120 based on the first function configuration information. The first function instance is at least configured by the user 105 to perform one or more types of data operations 222, among the at least one type of data operation 222, on at least part of the first data object. For example, the first function instance is employee information input.

For example, the application management platform 110 creates the adding a data function for employee information input in the target application 120. When new employee information is entered into the first function instance, the first function instance is configured to perform one or more types of data operations 222, among the at least one type of data operations 222, o n at least part of the first data object selected by the user 105. For example, the first function instance currently configured by the user 105 may only need to perform a function of adding, deleting and modifying data, and does not need to perform a querying function. Then the selection may be performed according to the requirements of the user 105.

In some embodiments, the application management platform 110 receiving the first function configuration information for the data operating function 212 includes: the application management platform 110 receiving a selection of the first data object from a set of candidate data objects through the first configuration page 130. The application management platform 110 receives a selection of at least one field in the first data object through the first configuration page 130.

The application management platform 110 selects at least one field among the first data object based on the user 105 selecting the first data object on the first configuration page 130.

The first function configuration information includes, but is not limited to, one or more types of data operations 222 among the at least one type of data operation 222, such as adding data, deleting data, modifying data, and querying data. The first function configuration information further includes the name of the first function instance, for example, employee information entry, employee information analysis, employee performance calibration, policy question and answering, etc. The first function configuration information further includes the description information of the first function instance, for example, description information for the employee information entry such as "basic information that needs to be entered after the new employee enters"; description information of the employee information analysis such as "analyzing information of the employee, knowing the work status of the employee, satisfaction, salary level, performance, etc."; description information for the policy question and answering such as "help users quickly learn HR policies of the company"; description information for the employee performance calibration "employee performance calibration on the performance of the employees". The first function configuration information further includes one or more example user inputs to the first function instance.

The description information of the first function instance is provided to a machine learning model (e.g., model 155 of FIG. 1A) to be used by the machine learning model to determine how to perform a user query for the first function instance. One or more example user inputs are used to determine a user query that matches the first function instance.

In some embodiments, the application management platform 110 provides a second configuration page for the data operating function 212 in response to a second adding request for the data operating function 212. When creating the target application 120, the application management platform 110 will receive an adding request for the data operating function 212. At this time, the application management platform 110 provides a second configuration page to the user 105 for creating a further function instance of the data operating function 212 in the current application. The application management platform 110 receives second configuration information for the data operating function through the second configuration page. The second configuration information at least indicates at least part of a second data object.

The application management platform 110 creates a second function instance of the data operating function in the target application based on the second function configuration information. The second function instance is configured to perform one or more types of data operations in at least one type of data operations on at least part of the second data object. The second data object herein may be the same as the first data object, and the second function instance may be configured to operate on data of different parts of the same data object, or different types of data operations on the same data object.

For example, the user 105 may configure different function instances, such as the first function instance and the second function instance, for a same data operating function. The second function instance indicates the second data object, which may be within the same set of data objects as the first data object, but the fields selected by the user 105 for the first data object and the second data object are different. That is, depending on the data operating function provided by the application management platform 110, the application creator may simply configure different function instances by selecting the data objects according to requirements of application creation, so as to implement various types of data operations on different data objects.

The user 105 may debug the data operating function 212. As shown in an example 201 shown in FIG. 2A, the user 105 may debug in the right session window 215 in the example 201. For example, during the debugging, the application management platform 110 may present a guidance message from the digital assistant, e.g., I am a digital assistant, I will answer your question to your queries. The user 105 will send certain entry information 216, and the digital assistant will reply with a message card 217 related to the certain entry information 216. The user 105 may perform the debugging data operating function 212 according to the determination message card 217.

Currently, a terminal device presents corresponding content through a user interface of an application and implements interaction with a user to meet various demands of the user. But in a general scenario, it stills fails to satisfy the user requirements of performing function operations such as addition ,deletion, modification, and query using natural language. A traditional solution allows inputting via a user interface (UI) form, but for a user, the cost of inputting via the UI form is high and the user experience is poor. In some embodiments of the present disclosure, after the target application 120 is released, it may support a user query of the end user 145 represented in natural language. After the target application 120 is released, the end user 145 may query in form of natural language. For example, the end user 145 may issue a user query to the target application 120 in form of natural language via text, voice, or the like. The end user 145 may ask the digital assistant to add, delete, modify, or query the associated data object using the natural language. In some embodiments, the target application 120 may utilize the digital assistant to receive a user query of the end user 145 and utilize the digital assistant to provide to the end user 145 an execution result corresponding to the user query. In this way, in the session window of the terminal user and the digital assistant, the user can freely trigger execution of various functions in the target application, and directly obtain the corresponding function execution results from the session window.

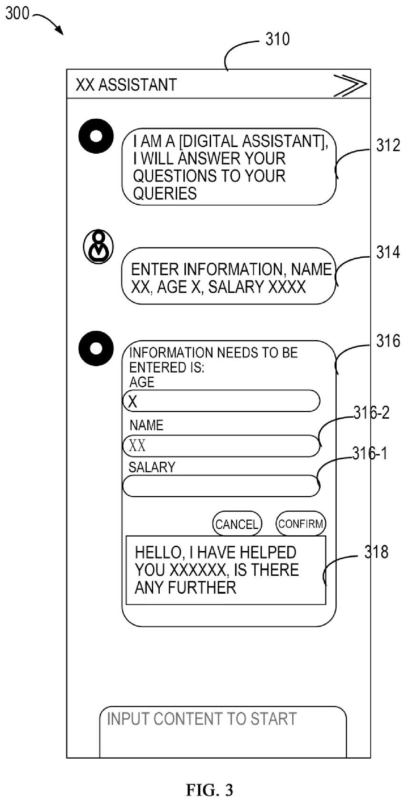

FIG. 3 illustrates a schematic diagram of an example interface 300 in accordance with some embodiments of the present disclosure, in which a session window 310 of a digital assistant with an end user 145 in the target application 120 is provided by the terminal device 146. It should be understood that the application interface shown in the drawings is merely an example, and there may be various interface designs. The graphical elements in the interface may have different arrangements and different visual representations, one or more of which may be omitted or replaced, and one or more other elements may also be present. Embodiments of the present disclosure are not limited in this regard. When the session window 310 is triggered to be presented, a guidance message 312 may be provided to introduce the functions of the target application or the digital assistant therein to the user.

In the following examples, for the purposes of discussion, it is assumed that the application is still supported by the application management platform 110 shown in FIG. 1A during runtime after the target application has been released. A page 142 presented by the application management platform 110 may be presented via the terminal device 146 of the end user 145, and user input may be received via the terminal device of the end user 145.

The application management platform 110 receives and processes user queries of the end user 145 of the target application 120. In some embodiments, depending on the configuration of the target application 120, a machine learning model, such as the model 155, may be invoked to help understand the user query and determine which of the function instances in the target application 120 is to be invoked to match the user query. During the processing of the user query, if it is determined that the user query matches the first function instance, the first type of data operation is determined from one or more types of data operations, to be used to perform the user query. The application management platform 110 first determines whether the query of the end user 145 matches the first function instance.

In some embodiments, the application management platform 110 determines at least one field associated with the user query from at least part of the first data object. Based on determining that the query of end user 145 matches the first function instance, the application management platform 110 proceeds to identify an intent of the end user 145, e.g., which data operation is required by the end user 145. The application management platform 110 then extracts a field(s) matching the end user 145 from the first data object.

The application management platform 110 determines, based on determining that the query of the end user 145 hits the first function instance, at least one field associated with the user query from at least part of the first data object. For example, the first data object may include various fields, but the fields associated with a user query may include the name field, the age field, the work experience field, etc., among those fields.

In some embodiments, the application management platform 110 performs the first type of data operation on the at least one field. For example, the application management platform 110 performs data operations for data augmentation on at least one field.

In an example, the application management platform 110 provides a form to the end user 145. As shown in FIG. 3, the application management platform 110 presents a reply card 316 from the digital assistant, at least one field being presented in the form. After receiving confirmation on the form by the end user 145, the application management platform 110 performs the first type of data operation on the at least one field presented in the form. As shown in an example interface 300 of FIG. 3, in the session window 310 of the digital assistant in the target application 120 and the end user 145, in response to the user query 314 from the end user 145, and after invoking the first function instance to determine the execution result of the data operation of the corresponding type, the application management platform 110 may present the execution result of the data operation in form of a message from the digital assistant. For example, the application management platform 110 presents a reply message card 316 of the digital assistant in the session window 310. The reply message card 316 may provide at least one field in a form that matches the user query 314.

In some examples, if the application management platform 110 fails to determine a field value from this query of the end user 145, the application management platform 110 may present the field value of the field as "void" in the form. As shown in FIG. 3, the application management platform 110 presents a void field 316-1 in the reply message card 316.

For example, the application management platform 110 receives query information "input information, name XX, age X, salary XXXX" from the end user 145, and the application management platform 110 presents the reply message card 316 of the digital assistant "the entry information is: XXX". But since the application management platform 110 fails to determine a field value from this query of the end user 145, the application management platform 110 presents a void field 316 -1 in the reply message card 316. At this time, the end user 145 may confirm the reply message card 316, and then the application management platform 110 receives the confirmation of the reply message card by the end user 145, and executes the data operation required by the end user 145 on the void field 316-1 presented in the message card 316.

In some embodiments, the application management platform 110 receives, from the end user 145, a respective field value(s) of one or more fields among the at least one field. The application management platform 110 performs the first type of data operation on the at least one field based on the respective field value(s) of the received one or more fields. For example, the application management platform 110 presents a message 318 from the digital assistant based on the employee entry information sent by the end user 145: "Hello, I have helped you... is there any further information to be entered?" The end user 145 may re-send a respective field value(s) of the one or more fields among the at least one field. The application management platform 110 performs the first type of data operation on the one or more fields of the at least one field re-sent by the end user 145.

In an example, the application management platform 110 presents the message 318 from the digital assistant based on the employee entry information sent by the end user 145: "Hello, I have helped you... is there any further information to be entered?" The end user 145 may further fill the respective field value(s) of the one or more fields of the at least one field in the message 318. The application management platform 110 performs the first type of data operation on the one or more fields of the at least one field re-sent by the end user 145 .

In some embodiments, the first type of data operation includes an updating operation on the at least one field. The application management platform 110 updates the at least one field in the first data object in response to receiving a confirmation on the execution result by the end user 145.

For example, for various types of data operations, such as adding data, modifying data, etc., the data object is updated during the execution of the application management platform 110. When the end user 145 confirms the execution result of the application management platform 110, the application management platform 110 updates the data object. However, when the end user 145 merely requests a query and does not confirm the execution result of the application management platform 110, the application management platform 110 will not update the data object.

For example, when the data operation is to add a corresponding field value(s) of one or more fields, the application management platform 110 may determine the intent of the end user 145 according to a message currently entered by the end user 145, a context message, a data object, a field(s), or the like. If the application management platform 110 does not collect all required fields, it may return a message with the following structure: text of a follow-up question, a form with collected field(s), a form with uncollected field(s), a save button, and a button to exit conversation.

If the application management platform 110 has collected all required fields, the structure of the message card is returned. In the returned message card, there may include a text confirmed by the end user 145, a form with collected fields, a save button, and a button to exit conversation.

If the end user 145 clicks on the button to exit conversation, then the data operating function is exited and an exit message is returned. If the end user 145 clicks the save button, the creation operation is executed and if the operation is successful, then a message of success is sent. If the end user 145 does not have permission to create an object, an error message indicating no permission is returned. If the end user 145 failed to create, an error cause is returned.

For example, when a data operation modifies a respective field value(s) of one or more fields, the application management platform 110 may determine an intent of the end user 145 according to the message currently entered by the end user 145, the context message, the data object, the field(s), etc. If there is a field to be modified by the end user 145, the application management platform 110 returns a confirming message card: a text of requiring confirmation from the end user 145, a field to be modified by the end user 145, a modified content, a save button, and a button to exit conversation.

If the end user 145 clicks on button to exit conversation, the data operating function is exited and an exit message is returned. If the end user 145 clicks the save button, an editing operation is performed and if the operation is successful, a message of success is sent. If the end user 145 does not have permission to modify the field, an error message indicating no permission is returned. If the end user 145 failed to modify, an error cause is returned.

It is described above that after the application management platform 110 creates the target application 120 and the target application 120 is released, the application management platform 110 may receive the user query represented in the natural language from the end user 145 through the terminal device 146, and perform the data operation based on the user query.

It will be described in the following that the application management platform 110 presents the form corresponding to the user query by referring back to FIG. 3.

In some examples, the application management platform 110 receives a user query for the target application 120. The application management platform 110 processes the user query by using the first function instance in the target application 120. The first function instance is at least configured to perform one or more types of data operations on at least part of the first data object.

In some examples, the application management platform 110 first determines that the user query matches the first function instance in the target application 120, and then determines the first type of data operation from one or more types of data operations that are used to perform the user query. The application management platform 110 determines, from at least part of the first data object, at least one field associated with the user query.

In some embodiments, the application management platform 110 presents a form of the user query according to the user query. As shown in FIG. 3, the application management platform 110 presents the form of the user query, such as the reply message card 316 from the digital assistant, in the session window 310 of the digital assistant in the target application 120 and the end user 145. The form includes at least one field of the first data object that is associated with the user query.

In some embodiments, the application management platform 110 may further receive a confirmation on the form by the user, and perform the data operation of the first type according to the at least one field in the form confirmed by the user. Further, the application management platform 110 presents an execution result of the first type of data operation.

In some examples, the application management platform 110 receives query information of the end user 145 "entry information XXXX", and the application management platform 110 presents a reply message card 316 of the digital assistant "the entry information is: XXX". But since the application management platform 110 fails to determine a field value from this query of the end user 145, a certain void field 316-1 is presented in the reply message card 316. At this time, the end user 145 may confirm the reply message card 316, and then the application management platform 110 receives the confirmation on the reply message card by the end user 145, and executes the data operation required by the end user 145 on the certain void field 316-1 presented in the message card 316.

In some embodiments, the application management platform 110 may determine, from at least a part of the first data object, at least one field associated with the user query by providing the user query and information related to the at least part of the first data object to the target model, and receiving an output of the target model. In some examples, the information related to the at least part of the first data object may include a header of the first data object (e.g., a data table), names of respective fields in the at least part of the first data object, and the like .

In some examples, the first data object may include various fields, but the fields queried by the user may be a name field, an age field, and a work experience field, among those fields. For example, the first data object corresponding to a certain employee includes not only the age field and the work experience field, but also many other fields, but the end user 145 may only input the age field and the work experience field of the employee, and the application management platform may output, based on the target model, the form corresponding to the age field and the work experience field of the employee that is queried by the end user 145.

In some embodiments, the generation of the form may also be based on the model output. For example, the application management platform 110 receives a user query input by the end user 145 in natural language, and generates a data table corresponding to the user query by the target model. The application management platform 110 sends the generated data table corresponding to the user query to the target model (for example, the LLMS), and performs semantic understanding and analysis on the user query described in the natural language sent by the end user 145 using the target model. The target model outputs a form associated with the user query according to the semantic understanding and analysis. The application management platform 110 receives the form output by the target model associated with the user query and presents it in the session window 310 of the digital assistant in the target application 120 and the end user 145.

In some embodiments, the first function instance is further configured to perform one or more types of data operations on at least part of the second data object. In some embodiments, the application management platform 110 may first determine, from the first data object and the second data object, a data object associated with the user. The application management platform 110 then determines at least one field associated with the user query from at least a portion of the associated data object.

In some embodiments, the first function instance is further configured to perform one or more types of data operations on at least part of the second data object. In some examples, the application management platform 110 may provide the target model by first providing the user query, information related to the at least part of the first data object, and the at least part of the second data object. The application management platform 110 then receives at least one field output from the target model associated with the user query in the first data object or the second data object.

The application management platform 110 may also receive input of the respective field value(s) for one or more fields of the at least one field. The form presented by the application management platform 110 in the session window 310 of the digital assistant in the target application 120 and the end user 145 may include input boxes for the respective field value(s) of the one or more fields. As shown in FIG. 3, the application management platform 310 presents a reply card message 316 from the digital assistant as a form, the form including input boxes of a respective field value(s) of one or more fields, such as an input box 316 -1 of the salary field, an input box 316 -2 of the name field, and the like.

The application management platform 110 may receive an input to one or more field values in the input boxes included in the form, and update the form according to the field values corresponding to the one or more fields. In some embodiments, the application management platform may further accept a field value(s) to be supplemented or modified by the end user 145 during a conversation in natural language, and update the form according to the field value(s) corresponding to the one or more fields. In some embodiments, the first type of data operation may further include an updating operation on the at least one field. After receiving the confirmation on the form by the end user 145, the application management platform 110 may trigger an update to the at least one field in the first data object.

In this way, the user may be able to request the digital assistant to add or delete the associated data object using the natural language. Further, for the input of the end user 145, the application management platform 110 renders a form that is matched based on intent recognition and field extraction, and presents the form to the end user 145 for further confirmation by the user.

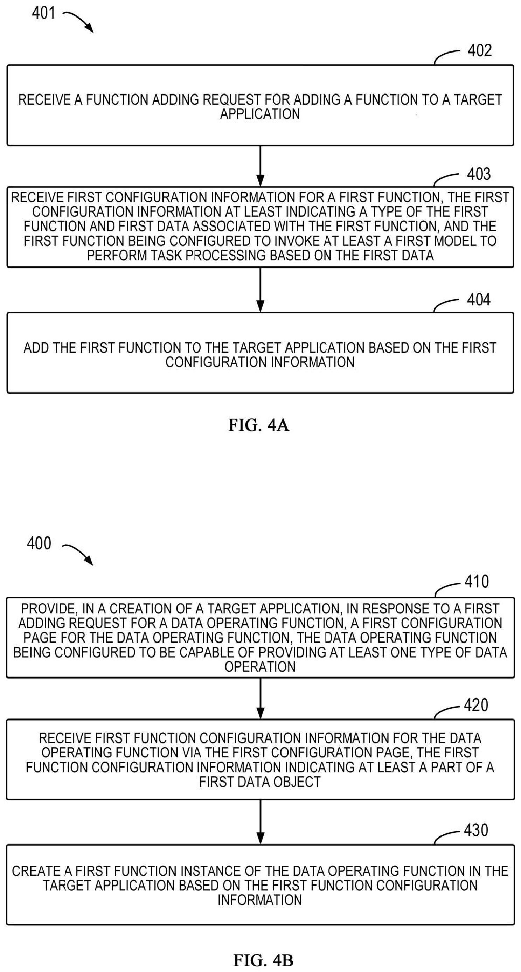

FIG. 4A illustrates a flowchart of a process 401 for application creation according to some embodiments of the present disclosure. The process 401 may be implemented at the application management platform 110. The process 401 is described below with reference to FIGS. 1A.

At block 402, the application management platform 110 receives a function adding request for adding a function to a target application.

At block 403, the application management platform 110 receives first configuration information for a first function, the first configuration information at least indicating a type of the first function and first data associated with the first function, and the first function being configured to invoke at least a first model to perform task processing based on the first data.

At block 404, the application management platform 110 adds the first function to the target application based on the first configuration information.

In some embodiments, receiving the first configuration information includes: providing a function configuration page in response to receiving the function adding request; and receiving the first configuration information via the function configuration page.

In some embodiments, receiving the first configuration information for the first function includes: receiving a selection of a type of the first function from a plurality of predetermined function types; and receiving, in response to the selection of the type of the first function, the first configuration information corresponding to the type of the first function.

In some embodiments, the plurality of predetermined function types includes at least one of the following: a data processing function, a question and answering function, or a data analysis function.

In some embodiments, receiving the first configuration information for the first function includes: receiving a selection of a first data source of one or more data sources; providing an option for one or more data objects in the first data source; and receiving a selection of a first data object of the one or more data objects as at least a part of the first data.

In some embodiments, the one or more data sources include at least one type of data source of: a data sheet, an analysis table, a knowledge library, a data stream, and a term library.

In some embodiments, receiving the first configuration information for the first function includes: creating a first workflow corresponding to the first function; and receiving, in response to a creating request for a first work node in the first workflow, node configuration information for the first work node, the node configuration information indicating an input parameter, an output parameter, and a first operation to be performed of the first work node, and the first operation comprising one of the following: invoking the first model, a data processing operation based on the first data, processing logic of the first work node, sending a notification message, invoking a created function in the target application.

In some embodiments, the target application is added with a set of functions including the first function, and further includes: receiving a function scheduling configuration, the function scheduling configuration indicating scheduling of the set of functions.

In some embodiments, receiving the function scheduling configuration includes receiving second configuration information for a plurality of work nodes in a second workflow, the second configuration information indicating that at least one work node of the plurality of work nodes is associated with one or more functions of the set of functions.

In some embodiments, receiving the function scheduling configuration includes receiving a prompt, wherein in response to performing the processing request for the target application, the prompt is provided to a second model to determine at least one function of the set of functions that is scheduled for performing a processing request.

In some embodiments, the process 401 further includes: providing a model configuration page; and receiving a selection of at least one model via the model configuration page, the at least one model being invoked in response to performing a processing request for the target application.

FIG. 4B shows a flowchart of a process 400 for data processing according to some embodiments of the present disclosure. The process 400 may be implemented at the application management platform 110. The process 400 is described below with reference to FIG. 1A.

At block 410, the application management platform 110 provides, in a creation of a target application, in response to a first adding request for a data operating function, a first configuration page for the data operating function, the data operating function being configured to be capable of providing at least one type of data operation.

At block 420, the application management platform 110 receives first function configuration information for the data operating function via the first configuration page, the first function configuration information indicating at least a part of a first data object.

At block 430, the application management platform 110 creates a first function instance of the data operating function in the target application based on the first function configuration information, the first function instance being configured to at least perform one or more types of data operations among the at least one type of data operation on the at least part of the first data object.

In some embodiments, receiving the first function configuration information for the data operating function includes: receiving a selection of the first data object in a set of candidate data objects via the first configuration page; and receiving a selection of at least one field in the first data object via the first configuration page.

In some embodiments, the first function configuration information further indicates at least one of: the one or more types of data operations among the at least one type of data operation, a name 232 of the first function instance, description information 234 for the first function instance, the description information being provided to a machine learning model for performing a user query for the first function instance, or one or more example 236 user inputs of the first function instance for determining a user query matching the first function instance.

In some embodiments, the process 400 further includes: providing, in response to a second adding request for the data operating function, a second configuration page for the data operating function; receiving second function configuration information for the data operating function via the second configuration page, the second function configuration information indicating at least a part of a second data object; and creating a second function instance of the data operating function in the target application based on the second function configuration information, the second function instance being configured to perform one or more types of data operations among the at least one type of data operation on the at least part of the second data object.

In some embodiments, the process 400 further includes after the target application is released, receiving a user query of an end user represented in a natural language; determining, in response to determining that the user query matches the first function instance, from the one or more types of data operations, that a first type of data operation is to perform the user query; determining at least one field associated with the user query from the at least part of the first data object; and performing the first type of data operation on the at least one field.

In some embodiments, the process 400 further includes providing an execution result of the first type of data operation in form of a message from a digital assistant in a chat window of the end user and the digital assistant in the target application.

In some embodiments, the process 400 further includes receiving respective field values of one or more fields of the at least one field from the end user; and updating the execution result based on the respective field values of the one or more fields.

In some embodiments, the first type of data operation includes an updating operation of the at least one field, and the method further includes, in response to receiving a confirmation to the execution result of the end user, updating the at least one field in the first data object.

In some embodiments, providing the execution result includes presenting the execution result in the form of a message from the digital assistant in a session window of the end user with the digital assistant in the target application.

In some embodiments, the at least one type of data operation includes at least one of: increasing respective field values of the one or more fields, reading respective field values of the one or more fields, modifying respective field values of the one or more fields, or deleting respective field values of the one or more fields.

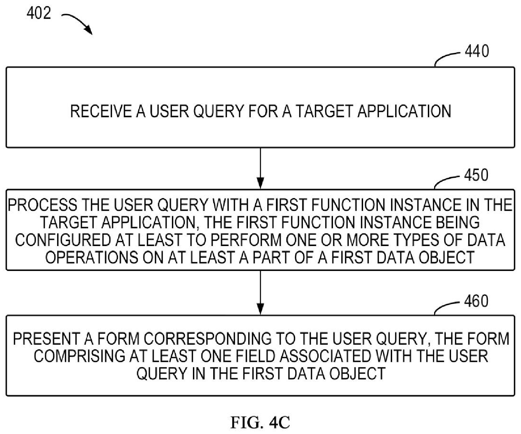

FIG. 4C illustrates a flowchart of a process 402 for data processing according to some embodiments of the present disclosure. The process 402 may be implemented at the application management platform 110. The process 402 is described below with reference to FIG. 1A.

At block 440, the application management platform 110 receives a user query for a target application.

At block 450, the application management platform 110 processes the user query with a first function instance in the target application, the first function instance being configured at least to perform one or more types of data operations on at least a part of a first data object.

At block 460, the application management platform 110 presents a form corresponding to the user query, the form comprising at least one field associated with the user query in the first data object.

In some embodiments, processing the user query with the first function instance in the target application includes: determining, in response to determining that the user query matches the first function instance in the target application, from the one or more types of data operations, that a first type of data operation is to perform the user query; and determining at least one field associated with the user query from the at least part of the first data object.

In some embodiments, the process 402 further includes receiving a confirmation to the form by a user; performing the first type of data operation based on the at least one field in the confirmed form; and presenting an execution result of the first type of data operation.

In some embodiments, determining the at least one field associated with the user query from the at least part of the first data object includes: providing the user query and information related to the at least part of the first data object to a target model; and r receiving a model output from the target model, the model output indicating the at least one field associated with the user query, wherein the form is generated based on the model output.

In some embodiments, the the first function instance is further configured to perform one or more types of data operations on at least a part of a second data object, and wherein determining the at least one field associated with the user query includes: determining a data object associated with the user from the first data object and the second data object; and determining the at least one field associated with the user query from at least a part of the associated data object.

In some embodiments, the the first function instance is further configured to perform one or more types of data operations on at least a part of a second data object, and wherein determining the at least one field associated with the user query includes: providing, to a target model, the user query andinformation related to the at least part of the first data object and the at least part of the second data object; and receiving a model output from the target model, the model output indicating the at least one field associated with the user query in the first data object or the second data object, wherein the form is generated based on the model output.

In some embodiments, the process 402 further includes: receiving an input of a respective field value of one or more fields of the at least one field; and updating the form based on the respective field value of the one or more fields.

In some embodiments, the presented form includes an input box for the respective field value of the one or more fields, and wherein receiving the input of the respective field value of the one or more fields of the at least one field in the form includes receiving the input to the respective field value of the one or more fields in the input box in the form.

In some embodiments, the first type of data operation includes an updating operation to the at least one field, and the method further includes triggering, in response to receiving a confirmation to the form, an update to the at least one field in the first data object.

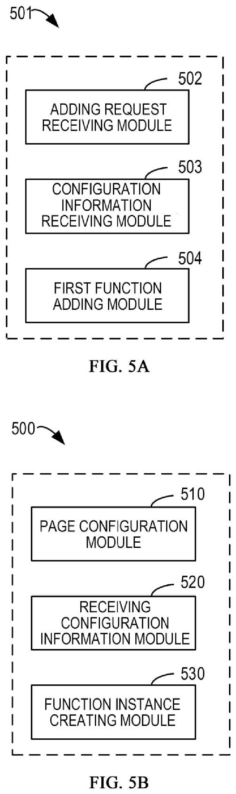

FIG. 5A illustrates a schematic structural block diagram of an apparatus 501 for application creation according to some embodiments of the present disclosure. For example, the apparatus 501 may be implemented in or included in the application management platform 110. The various modules/components in the apparatus 501 may be implemented in hardware, software, firmware, or any combination thereof.

As shown, the apparatus 501 includes an adding request receiving module 502 configured to receive a function adding request for adding a function to a target application.

The apparatus 501 further includes a configuration information receiving module 503, configured to receive first configuration information for a first function, the first configuration information at least indicating a type of the first function and first data associated with the first function, and the first function being configured to invoke at least a first model to perform task processing based on the first data.

The apparatus 501 further includes a first function adding module 504 configured to add the first function to the target application based on the first configuration information.

In some embodiments, the configuration information receiving module 503 is further configured to provide a function configuration page in response to receiving the function adding request; and receive the first configuration information via the function configuration page.

In some embodiments, the configuration information receiving module 503 is further configured to receive a selection of a type of the first function from a plurality of predetermined function types; and receive, in response to the selection of the type of the first function, the first configuration information corresponding to the type of the first function.

In some embodiments, the plurality of predetermined function types includes at least one of: a data processing function, a question and answering function, or a data analysis function.

In some embodiments, the configuration information receiving module 503 is further configured to receive a selection of a first data source of one or more data sources; provide an option for one or more data objects in the first data source; and receive a selection of a first data object of the one or more data objects as at least a part of the first data.

In some embodiments, the one or more data sources include at least one type of data source of: a data sheet, an analysis table, a knowledge library, a data stream, or a term library.

In some embodiments, the configuration information receiving module 503 is further configured to create a first workflow corresponding to the first function; and receive, in response to a creating request for a first work node in the first workflow, node configuration information for the first work node, the node configuration information indicating an input parameter, an output parameter, and a first operation to be performed of the first work node, and the first operation comprising one of the following: invoking the first model, a data processing operation based on the first data, processing logic of the first work node, sending a notification message, or invoking a created function in the target application.

In some embodiments, the target application is added with a set of functions including the first function, and the apparatus 501 further includes a function scheduling configuration receiving module, configured to receive a function scheduling configuration, the function scheduling configuration indicating scheduling of the set of functions.

In some embodiments, the function scheduling configuration receiving module is further configured to receive second configuration information for a plurality of work nodes in a second workflow, the second configuration information indicating that at least one work node of the plurality of work nodes is associated with one or more functions of the set of functions.

In some embodiments, the function scheduling configuration receiving module is further configured to receive a prompt, wherein in response to performing the processing request for the target application, the prompt is provided to a second model to determine at least one function of the set of functions that is scheduled for performing a processing request.

In some embodiments, the apparatus 501 further includes a model configuration page providing module configured to provide a model configuration page; and receive a selection of at least one model via the model configuration page, the at least one model being invoked in response to performing a processing request for the target application.

FIG. 5B shows a schematic structural block diagram of an apparatus 500 for digital assistant creation according to some embodiments of the present disclosure. For example, the apparatus 500 may be implemented in or included in the application management platform 110. The various modules/components in the apparatus 500 may be implemented in hardware, software, firmware, or any combination thereof.

As shown, the apparatus 500 includes a page configuration module 510 configured to provide, in the creation of a target application, a first configuration page for a data operating function in response to a first adding request for a data operating function, the data operating function configured to be capable of providing at least one type of data operation.

The apparatus 500 further includes a receiving configuration information module 520 configured to receive first function configuration information for the data operating function via the first configuration page, the first function configuration information indicating at least a part of a first data object.

The apparatus 500 further includes a function instance creating module 530 configured to create a first function instance of the data operating function in the target application based on the first function configuration information, the first function instance being configured to perform one or more types of data operations among the at least one type of data operation on the at least part of the first data object.

In some embodiments, the receiving configuration information module 520 is further configured to receive the first function configuration information for the data operating function includes: receiving a selection of the first data object in a set of candidate data objects via the first configuration page; and receiving a selection of at least one field in the first data object via the first configuration page.

In some embodiments, the first function configuration information further indicates at least one of: the one or more types of data operations among the at least one type of data operation, a name of the first function instance, description information for the first function instance, the description information being provided to a machine learning model for performing a user query for the first function instance, or one or more example user inputs of the first function instance for determining a user query matching the first function instance.

In some embodiments, the page configuration module 510 is further configured to provide, in response to a second adding request for the data operating function, a second configuration page for the data operating function.

In some embodiments, the receiving configuration information module 520 is further configured to receive second function configuration information for the data operating function via the second configuration page, the second function configuration information indicating at least a part of a second data object.

In some embodiments, the function instance creating module 530 is further configured to create a second function instance of the data operating function in the target application based on the second function configuration information, the second function instance being configured to perform one or more types of data operations among the at least one type of data operation on the at least part of the second data object.

In some embodiments, after the target application is released, a user query of the end user represented in a natural language is received; in response to determining that the user query matches the first function instance, a first type of data operation is determined from one or more types of data operations to be used to execute the user query; at least one field associated with the user query is determined from at least part of the first data object; and a first type of data operation is performed on the at least one field.

In some embodiments, an execution result of the first type of data operation is provided to the end user, and the execution result presents at least one field in the form of a form.

In some embodiments, respective field value of one or more fields of the at least one field is received from the end user; and the execution result is updated based on the respective field value of the one or more fields.

In some embodiments, the first type of the data operation includes an updating operation of the at least one field, and the receiving configuration information module 520 is further configured to update the at least one field in the first data object in response to receiving the confirmation that the end user performs the execution result.

In some embodiments, providing the execution result includes presenting the execution result in the form of a message from the digital assistant in a session window of the end user with the digital assistant in the target application.

In some embodiments, the at least one type of data operation includes at least one of: increasing respective field value of the one or more fields, reading respective field value of the one or more fields, modifying a respective field value of the one or more fields, or deleting a respective field value of the one or more fields.

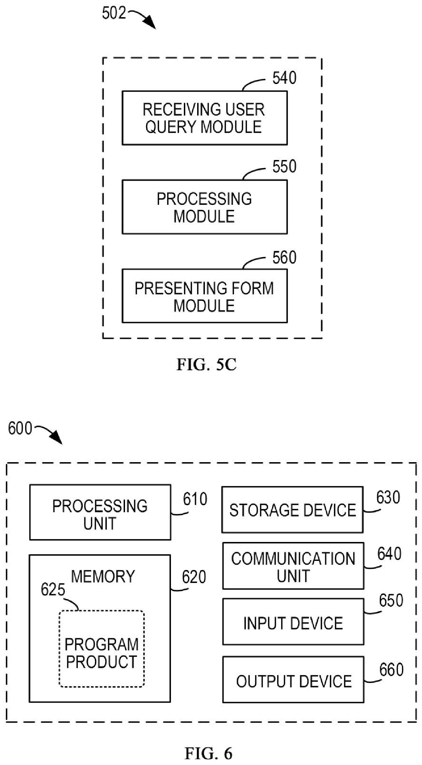

FIG. 5C shows a schematic structural block diagram of an apparatus 502 for digital assistant creation according to some embodiments of the present disclosure. For example, the apparatus 502 may be implemented in or included in the application management platform 110. The various modules/components in the apparatus 502 may be implemented in hardware, software, firmware, or any combination thereof.

As shown, the apparatus 502 includes a receiving user query module 540 configured to receive a user query for a target application.

The apparatus 502 further includes a processing module 550 configured to process the user query with a first function instance in the target application, the first function instance being at least configured to perform one or more types of data operations on at least part of the first data object.

The apparatus 502 further includes a presenting form module 560 configured to present a form corresponding to the user query, the form comprising at least one field associated with the user query in the first data object. In some embodiments, processing the user query with the first function instance in the target application includes: determining, in response to determining that the user query matches the first function instance in the target application, from the one or more types of data operations, that a first type of data operation is to perform the user query; and determining at least one field associated with the user query from the at least part of the first data object.

In some embodiments, the receiving user query module 540 is further configured to receive a confirmation to the form by the user; perform the first type of data operation based on the at least one field in the confirmed form; and present an execution result of the first type of data operation.

In some embodiments, determining the at least one field associated with the user query from the at least part of the first data object includes: providing the user query and information related to the at least part of the first data object to a target model; and receiving a model output from the target model, the model output indicating the at least one field associated with the user query, wherein the form is generated based on the model output.

In some embodiments, the first function instance is further configured to perform one or more types of data operations on at least a part of a second data object, and wherein determining the at least one field associated with the user query includes: determining a data object associated with the user from the first data object and the second data object; and determining the at least one field associated with the user query from at least a part of the associated data object.

In some embodiments, the first function instance is further configured to perform one or more types of data operations on at least a part of a second data object, and wherein determining the at least one field associated with the user query includes: providing, to a target model, the user query andinformation related to the at least part of the first data object and the at least part of the second data object; and receiving a model output from the target model, the model output indicating the at least one field associated with the user query in the first data object or the second data object, wherein the form is generated based on the model output.

In some embodiments, the receiving user query module 540 is further configured to receive an input of a respective field value of one or more fields of the at least one field; and update the form based on the respective field value of the one or more fields.

In some embodiments, the presented form comprises an input box for the respective field value of the one or more fields, and wherein receiving the input of the respective field value of the one or more fields of the at least one field in the form includes receiving the input to the respective field value of the one or more fields in the input box in the form.

In some embodiments, the first type of data operation includes an updating operation on the at least one field, and the processing module 550 is further configured to trigger, in response to receiving a confirmation to the form, an update to the at least one field in the first data object.

FIG. 6 illustrates a block diagram of an electronic device 600 in which one or more embodiments of the present disclosure may be implemented. It should be understood that the electronic device 600 illustrated in FIG. 6 is merely an example and should not constitute any limitation on the functionality and scope of the embodiments described herein. The electronic device 600 shown in FIG. 6 may include or be implemented as the application management platform 110 of FIG. 1A, or the apparatuses 501, 500, and/or 502 of FIG. 5A, FIG. 5B, and/or FIG. 5C.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be a physical or virtual processor and capable of performing various processes according to programs stored in the memory 620. In multiprocessor systems, multiple processing units execute computer-executable instructions in parallel to improve parallel processing capabilities of electronic device 600.

The electronic device 600 typically includes a plurality of computer storage media. Such media may be any available media accessible to the electronic device 600, including, but not limited to, volatile and non-volatile media, removable and non-removable media. The memory 620 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 630 may be a removable or non-removable medium and may include a machine-readable medium, such as a flash drive, magnetic disk, or any other medium, which may be capable of storing information and/or data and may be accessed within electronic device 600.

The electronic device 600 may further include additional removable/non-removable, volatile/non-volatile storage media. Although not shown in FIG. 6, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 620 may include a computer program product 625 having one or more program modules configured to perform various methods or actions of various embodiments of the present disclosure.

The communication unit 640 is configured to communicate with another electronic device through a communication medium. Additionally, the functionality of components of the electronic device 600 may be implemented in a single computing cluster or multiple computing machines capable of communicating over a communication connection. Thus, the electronic device 600 may operate in a networked environment using logical connections with one or more other servers, network personal computers (PCs), or another network node.

The input device 650 may be one or more input devices, such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc. , communicate with one or more devices that enable a user to interact with the electronic device 600, or communicate with any device (e.g., a network card, a modem, etc. ) that enables the electronic device 600 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowcharts and/or block diagrams, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or one or more blocks in the block diagrams.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or actions, or may be implemented in a combination of dedicated hardware and computer instructions.

Various implementations of the present disclosure have been described above, which are examples, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of application creation, comprising:
receiving a function adding request for adding a function to a target application;
receiving first configuration information for a first function, the first configuration information at least indicating a type of the first function and first data associated with the first function, and the first function being configured to invoke at least a first model to perform task processing based on the first data; and
adding the first function to the target application based on the first configuration information.

2. The method of claim 1, wherein receiving the first configuration information comprises:
providing a function configuration page in response to receiving the function adding request;
receiving the first configuration information via the function configuration page.

3. The method of claim 1, wherein receiving the first configuration information for the first function comprises:
receiving a selection of a type of the first function from a plurality of predetermined function types; and
receiving, in response to the selection of the type of the first function, the first configuration information corresponding to the type of the first function.

4. The method of claim 3, wherein the plurality of predetermined function types comprises at least one of:
a data processing function,
a question and answering function, or
a data analysis function.

5. The method of claim 1, wherein receiving the first configuration information for the first function comprises:
receiving a selection of a first data source of one or more data sources;
providing an option for one or more data objects in the first data source; and
receiving a selection of a first data object of the one or more data objects as at least a part of the first data.

6. The method of claim 5, wherein the one or more data sources comprise at least one type of data source of:
a data sheet,
an analysis table,
a knowledge library,
a data stream, or
a term library.

7. The method of claim 1, wherein receiving the first configuration information for the first function comprises:
creating a first workflow corresponding to the first function; and
receiving, in response to a creating request for a first work node in the first workflow, node configuration information for the first work node, the node configuration information indicating an input parameter, an output parameter, and a first operation to be performed of the first work node, and the first operation comprising one of the following:
invoking the first model,
a data processing operation based on the first data,
processing logic of the first work node,
sending a notification message, or
invoking a created function in the target application.

8. The method according to claim 1, wherein the target application is added with a set of functions comprising the first function, and further comprising:
receiving a function scheduling configuration, the function scheduling configuration indicating scheduling of the set of functions.

9. The method of claim 8, wherein receiving the function scheduling configuration comprises:
receiving second configuration information for a plurality of work nodes in a second workflow, the second configuration information indicating that at least one work node of the plurality of work nodes is associated with one or more functions of the set of functions.

10. The method of claim 8, wherein receiving the function scheduling configuration comprises:
receiving a prompt, wherein in response to performing the processing request for the target application, the prompt is provided to a second model to determine at least one function of the set of functions that is scheduled for performing a processing request.

11. The method of claim 1, further comprising:
providing a model configuration page; and
receiving a selection of at least one model via the model configuration page, the at least one model being invoked in response to performing a processing request for the target application.

12. A method of data processing, comprising:
providing, in a creation of a target application, in response to a first adding request for a data operating function, a first configuration page for the data operating function, the data operating function being configured to be capable of providing at least one type of data operation;
receiving first function configuration information for the data operating function via the first configuration page, the first function configuration information indicating at least a part of a first data object; and
creating a first function instance of the data operating function in the target application based on the first function configuration information, the first function instance being configured to at least perform one or more types of data operations among the at least one type of data operation on the at least part of the first data object.

13. The method of claim 12, wherein receiving the first function configuration information for the data operating function comprises:
receiving a selection of the first data object in a set of candidate data objects via the first configuration page; and
receiving a selection of at least one field in the first data object via the first configuration page.

14. The method of claim 12, wherein the first function configuration information further indicates at least one of:
the one or more types of data operations among the at least one type of data operation,
a name of the first function instance,
description information for the first function instance, the description information being provided to a machine learning model for performing a user query for the first function instance, or
one or more example user inputs of the first function instance for determining a user query matching the first function instance.

15. The method of claim 12, further comprising:
providing, in response to a second adding request for the data operating function, a second configuration page for the data operating function;
receiving second function configuration information for the data operating function via the second configuration page, the second function configuration information indicating at least a part of a second data object; and
creating a second function instance of the data operating function in the target application based on the second function configuration information, the second function instance being configured to perform one or more types of data operations among the at least one type of data operation on the at least part of the second data object.

16. The method of claim 12, further comprising:
after the target application is released, receiving a user query of an end user represented in a natural language;
determining, in response to determining that the user query matches the first function instance, from the one or more types of data operations, that a first type of data operation is to perform the user query;
determining at least one field associated with the user query from the at least part of the first data object; and
performing the first type of data operation on the at least one field.

17. The method of claim 16, wherein performing the first type of data operation on the at least one field comprises:
providing a form to the end user, the form comprising at least the at least one field; and
performing, in response to receiving a confirmation to the form, the first type of data operation on the at least one field.

18. The method of claim 17, wherein performing the first type of data operation on the at least one field comprises:
receiving, from the end user, a respective field value of one or more fields of the at least one field; and
performing the first type of data operation on the at least one field based on the received respective field value of the one or more fields.

19. The method of claim 16, further comprising:
providing an execution result of the first type of data operation in form of a message from a digital assistant in a chat window of the end user and the digital assistant in the target application.

20. The method of claim 16, wherein the first type of data operation comprises an updating operation of the at least one field, and the method further comprises:
updating the at least one field in the first data object.

21. The method of claim 12, wherein the at least one type of data operation comprises at least one of:
adding a respective field value of one or more fields,
reading a respective field value of one or more fields,
modifying a respective field value of one or more fields, or
deleting a respective field value of one or more fields.

22. A method of data processing, comprising:
receiving a user query for a target application;
processing the user query with a first function instance in the target application, the first function instance being configured at least to perform one or more types of data operations on at least a part of a first data object; and
presenting a form corresponding to the user query, the form comprising at least one field associated with the user query in the first data object.

23. The method of claim 22, wherein processing the user query with the first function instance in the target application comprises:
determining, in response to determining that the user query matches the first function instance in the target application, from the one or more types of data operations, that a first type of data operation is to perform the user query; and
determining at least one field associated with the user query from the at least part of the first data object.

24. The method of claim 23, further comprising:
receiving a confirmation to the form by a user;
performing the first type of data operation based on the at least one field in the confirmed form; and
presenting an execution result of the first type of data operation.

25. The method of claim 23, wherein determining the at least one field associated with the user query from the at least part of the first data object comprises:
providing the user query and information related to the at least part of the first data object to a target model; and
receiving a model output from the target model, the model output indicating the at least one field associated with the user query,
wherein the form is generated based on the model output.

26. The method of claim 23, wherein the first function instance is further configured to perform one or more types of data operations on at least a part of a second data object, and wherein determining the at least one field associated with the user query comprises:
determining a data object associated with the user from the first data object and the second data object; and
determining the at least one field associated with the user query from at least a part of the associated data object.

27. The method of claim 23, wherein the first function instance is further configured to perform one or more types of data operations on at least a part of a second data object, and wherein determining the at least one field associated with the user query comprises:
providing, to a target model, the user query andinformation related to the at least part of the first data object and the at least part of the second data object; and
receiving a model output from the target model, the model output indicating the at least one field associated with the user query in the first data object or the second data object,
wherein the form is generated based on the model output.

28. The method of claim 22, further comprising:
receiving an input of a respective field value of one or more fields of the at least one field; and
updating the form based on the respective field value of the one or more fields.

29. The method of claim 28, wherein the presented form comprises an input box for the respective field value of the one or more fields, and wherein receiving the input of the respective field value of the one or more fields of the at least one field in the form comprises:
receiving the input to the respective field value of the one or more fields in the input box in the form.

30. The method of claim 23, wherein the first type of data operation comprises an updating operation to the at least one field, and the method further comprises:
triggering, in response to receiving a confirmation to the form, an update to the at least one field in the first data object.

31. An apparatus for application creation, comprising:
an adding request receiving module configured to receive a function adding request for adding a function to a target application;
a configuration information receiving module configured to receive first configuration information for a first function, the first configuration information at least indicating a type of the first function and first data associated with the first function, and the first function being configured to invoke at least a first model to perform task processing based on the first data; and
a first function adding module configured to add the first function to the target application based on the first configuration information.

32. An apparatus for data processing, comprising:
a page configuration module configured to provide, in a creation of a target application, in response to a first adding request for a data operating function, a first configuration page for the data operating function, the data operating function being configured to be capable of providing at least one type of data operation;
a receiving configuration information module configured to receive first function configuration information for the data operating function via the first configuration page, the first function configuration information indicating at least a part of a first data object; and
a function instance creating module configured to create a first function instance of the data operating function in the target application based on the first function configuration information, the first function instance being configured to perform one or more types of data operations among the at least one type of data operation on the at least part of the first data object.

33. An apparatus for data processing, comprising:
a receiving user query module configured to receive a user query for a target application;
a processing module configured to process the user query with a first function instance in the target application, the first function instance being configured at least to perform one or more types of data operations on at least a part of a first data object; and
a presenting form module configured to present a form corresponding to the user query, the form comprising at least one field associated with the user query in the first data object.

34. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 11, and/or perform the method of any of claims 12 to 21, and/or perform the method of any of claims 22 to 30.

35. A computer-readable storage medium having a computer program stored thereon, the computer program being executable by a processor to implement the method of any of claims 1 to 11, and/or to perform the method of any of claims 12 to 21, and/or to perform the method of any of claims 22 to 30.

36. A computer program product tangibly stored in a computer storage medium and comprising computer executable instructions, the computer executable instructions, when executed by a device, causing the device to perform the method of any of claims 1 to 11, and/or perform the method of any of claims 12 to 21, and/or perform the method of any of claims 22 to 30.
